# EUROPÄISCHE PATENTSCHRIFT

(11) **EP 3 566 559 B1**
(45) Veröffentlichungstag und Bekanntmachung des Hinweises auf die Patenterteilung: **11.11.2020**
(21) Anmeldenummer: 19401016.1
(22) Anmeldetag: 02.05.2019
(51) Int. Cl.: A01C 17/00

(54) **VERFAHREN ZUM BETREIBEN EINES LANDWIRTSCHAFTLICHEN STREUGERÄTS UND ENTSPRECHEND EINGERICHTES LANDWIRTSCHAFTLICHES STREUGERÄT**
METHOD FOR OPERATING AN AGRICULTURAL DISPERSION DEVICE AND RESPECTIVE AGRICULTURAL DISPERSION DEVICE
PROCÉDÉ DE FONCTIONNEMENT D'UN APPAREIL D'ÉPANDAGE AGRICOLE ET L'APPAREIL RESPECTIF D'ÉPANDAGE AGRICOLE

(30) Priorität: 07.05.2018 DE 102018110878
(43) Veröffentlichungstag der Anmeldung: 13.11.2019
(73) Patentinhaber: Amazonen-Werke H. Dreyer GmbH & Co. KG, 49205 Hasbergen (DE)
(72) Erfinder: Rahe, Florian, 49504 Lotte (DE); Große Brinkhaus, Andre, 48149 Münster (DE); Steinhorst, Sebastian, 49124 Georgsmarienhütte (DE); Wessels, Thomas, 49080 Osnabrück (DE)

(56) Entgegenhaltungen:
- DE-A1-102007 051 713
- DE-A1-102013 004 195

## Beschreibung

Die Erfindung betrifft ein Verfahren zum Betreiben eines landwirtschaftlichen Streugeräts nach dem Oberbegriff des Patentanspruchs 1 und ein landwirtschaftliches Streugerät nach dem Oberbegriff des Patentanspruchs 8.

Vor dem Ausbringen von Streugut mittels eines landwirtschaftlichen Streugeräts sind an dem landwirtschaftlichen Streugerät Einstellungen vorzunehmen, sodass während des Streuvorgangs eine beabsichtigte Streugutverteilung umgesetzt werden kann. Beispielsweise erfordert die Umsetzung einer beabsichtigten Arbeitsbreite die Einstellung eines entsprechenden Abwurfwinkels für das Streugut, wobei während des Ausbringvorgangs ebenfalls eine geeignete Drehzahl der einen oder der mehreren Verteilscheiben des landwirtschaftlichen Streugeräts einzustellen ist.

Aufgrund von Umgebungsbedingungen und/oder Veränderungen des auszubringenden Streuguts können Anpassungen der zuvor eingestellten Einstellparameter notwendig sein, um das beabsichtigte Ausbringergebnis tatsächlich erreichen zu können. Aus diesem Grund weisen moderne landwirtschaftliche Streugeräte Sensoren auf, mittels welchen Bewegungs- bzw. Flugeigenschaften des abgeworfenen Streuguts erfasst werden können. Wenn die erfassten Bewegungs- bzw. Flugeigenschaften des abgeworfenen Streuguts nicht den Solleigenschaften entsprechen, bedarf es einer entsprechenden Anpassung der Einstellparameter.

Es hat sich gezeigt, dass zur Ermittlung entsprechender Einstellparameter für das landwirtschaftliche Streugerät ebenfalls Informationen zu der einen oder den mehreren von dem landwirtschaftlichen Streugerät verwendeten Verteilscheiben erforderlich sind. Die Einstellparameter hängen beispielsweise erheblich von dem verwendeten Typ der einen oder mehreren Verteilscheiben ab. Beispielsweise beschreibt die Druckschrift DE 10 2013 004 195 A1 ein Verfahren, bei welchem auf Basis von erfassten Flugeigenschaften des ausgebrachten Streuguts und dem Verteilscheibentyp optimale Einstellparameter für das landwirtschaftliche Streugerät ermittelt werden.

Es besteht jedoch weiterhin das Problem, dass die notwendigen Informationen zu der montierten Verteilscheibe dem landwirtschaftlichen Streugerät vor Beginn des Ausbringvorgangs bereitzustellen sind. Die manuelle Eingabe entsprechender Informationen zu der Verteilscheibe durch einen Benutzer stößt in der Praxis auf wenig Akzeptanz und ist anfällig für Eingabefehler.

Aus der Druckschrift DE 10 2007 051 713 A1 ist es bekannt, die Verteilscheiben mit RFID-Transpondern auszustatten, wobei die Informationen zu der jeweiligen Verteilscheibe mittels eines entsprechenden Lesegeräts direkt von der Verteilscheibe abgerufen werden können. Derartige Lösungen sind einerseits fehleranfällig und führen andererseits zu einer Steigerung der Kosten, sowohl für das landwirtschaftliche Streugerät als auch für die Verteilscheibe.

Die der Erfindung zugrundeliegende Aufgabe besteht somit darin, die Bereitstellung von Informationen zu zumindest einer von dem landwirtschaftlichen Streugerät verwendeten rotierend antreibbaren Verteilscheibe zu vereinfachen.

Die Aufgabe wird gelöst durch ein Verfahren gemäß Anspruch 1 und ein landwirtschaftliches Streugerät gemäß Anspruch 8.

Die Erfindung macht sich die Erkenntnis zunutze, dass unterschiedliche Verteilscheiben auch unterschiedliche Abwurfcharakteristiken aufweisen. Somit ist es möglich, auf Grundlage einer ermittelten Abwurfcharakteristik des Streuguts Informationen zu der zumindest einen Verteilscheibe des landwirtschaftlichen Streugeräts abzuleiten. Eine manuelle Eingabe entsprechender Informationen zu der zumindest einen Verteilscheibe des landwirtschaftlichen Streugeräts durch einen Benutzer ist somit nicht länger notwendig. Ferner bedarf es auch keiner transponderbasierten Erfassung der verwendeten Verteilscheibe. Die Bereitstellung von Informationen zu der zumindest einen Verteilscheibe des landwirtschaftlichen Streugeräts wird somit erheblich vereinfacht. Die erfassten Informationen zu der zumindest einen Verteilscheibe des landwirtschaftlichen Streugeräts können dann beispielsweise bei der selbsttätigen Anpassung von Einstellparametern, wie etwa der Scheibendrehzahl oder dem Abwurfwinkel des Streuguts, während des Ausbringvorgangs verwendet werden. Moderne Streugeräte überwachen zur Einhaltung einer gewünschten Abwurfcharakteristik den Streufächer sensorisch und können darauf basierend automatisiert eine Anpassung der Einstellparameter vornehmen. Die somit vorliegenden Sensordaten können zur Durchführung des erfindungsgemäßen Verfahrens in vorteilhafter Weise genutzt werden.

Die Abwurfcharakteristik des Streugeräts betrifft vorzugsweise die Streugutverteilung unmittelbar nach dem Abwurf durch die zumindest eine Verteilscheibe und/oder die Fluggeschwindigkeit und/oder -richtung des Streuguts nach dem Abwurf durch die zumindest eine Verteilscheibe. Die Abwurfcharakteristik des Streuguts kann beispielsweise durch Eigenschaften des Streufächers beschrieben werden. Das Sensorsignal eines Sensors, welcher das abgeworfene Streugut detektiert, ist von der Abwurfcharakteristik des Streuguts abhängig.

Erfindungsgemäß umfassen die Informationen zu der zumindest einen Verteilscheibe Informationen zu dem Scheibentyp, dem Scheibenzustand und/oder der Scheibenkonfiguration. Die Informationen zu dem Scheibenzustand können beispielsweise die Stellung oder die Position von verstellbaren Leitelementen auf der Verteilscheibe betreffen. Die verstellbaren Leitelemente können beispielsweise als Wurfschaufeln auf der Verteilscheibe ausgebildet sein. Die Informationen zu der Scheibenkonfiguration können beispielsweise den Typ der auf der Verteilscheibe verbauten Leitelemente betreffen. Beispielsweise kann somit auch die Länge und/oder Stellung längenveränderlicher und/oder einstellbarer Wurfschaufeln erfasst werden, insbesondere vor oder während des Grenzstreuens. Die Informationen zu dem Scheibentyp können beispielsweise eine Typenbezeichnung umfassen.

In einer anderen bevorzugten Ausführungsform des erfindungsgemäßen Verfahrens wird mittels eines oder mehrerer Sensoren des landwirtschaftlichen Streugeräts zumindest ein Sensorsignal erzeugt, welches von der Abwurfcharakteristik des Streuguts abhängig ist. Der eine oder die mehreren Sensoren sind vorzugsweise als Radarsensoren ausgebildet. Der eine oder die mehreren Sensoren können jedoch auch als optische Sensoren oder Ultraschallsensoren ausgebildet sein. Der eine oder die mehreren Sensoren sind vorzugsweise im Bereich eines Vorratsbehälters für Streugut des landwirtschaftlichen Streugeräts angeordnet. Insbesondere ist der eine oder sind die mehreren Sensoren dazu ausgebildet, Eigenschaften zumindest eines Streufächers zu erfassen.

Zum Erfassen der Eigenschaften zumindest eines Streufächers, wird das abgeworfene Streugut mittels des zumindest einen Sensors vorzugsweise nach dem Dopplerprinzip detektiert. Dazu wird das abgeworfene Streugut vorzugsweise mit Radarstrahlen beaufschlagt. Das vom abgeworfenen Streugut reflektierten Signal wird erfasst und umfasst Informationen zur Fluggeschwindigkeit und/oder Richtung des abgeworfenen Streuguts. Das reflektierte Signal hängt somit von der Abwurfcharakteristik des Streuguts ab und lässt Rückschlüsse auf die Abwurfcharakteristik zu. Da die Abwurfcharakteristik in hohem Maße von der Beschaffenheit der Verteilscheibe, wie beispielsweise Durchmesser der Scheibe, Art und/oder Anordnung der Wurfschaufeln, abhängig ist, lässt das reflektierte Signal auch Rückschlüsse auf den verwendeten Typ der Verteilscheibe zu.

In einer weiteren Ausführungsform des erfindungsgemäßen Verfahrens umfasst das Erfassen von Informationen zu der zumindest einen Verteilscheibe das Auswerten des zumindest einen Sensorsignals, welches von der Abwurfcharakteristik des Streuguts abhängig ist, und/oder das Erfassen von Signaleigenschaften des zumindest einen Sensorsignals, welches von der Abwurfcharakteristik des Streuguts abhängig ist. Alternativ oder zusätzlich umfasst das Erfassen von Informationen zu der zumindest einen Verteilscheibe das Ableiten von Informationen zu der zumindest einen Verteilscheibe aus den erfassten Signaleigenschaften und/oder das Vergleichen der erfassten Signaleigenschaften mit Referenzwerten, wobei den Referenzwerten jeweils Informationen zu der zumindest einen Verteilscheibe zugeordnet sind. Beispielsweise sind die Referenzwerte und/oder die den Referenzwerten zugeordneten Informationen zu der zumindest einen Verteilscheibe auf einer Speichereinrichtung hinterlegt. Die Speichereinrichtung kann beispielsweise eine geräteinterne Speichereinrichtung des landwirtschaftlichen Streugeräts oder eine externe Speichereinrichtung sein, auf welche das landwirtschaftliche Streugerät zum Abrufen der Referenzwerte und/oder der den Referenzwerten zugeordneten Informationen zu der zumindest einen Verteilscheibe zugreifen kann. Insbesondere kann das Verfahren auch das Überprüfen der Informationen zu der zumindest einen Verteilscheibe hinsichtlich Plausibilität umfassen. Darüber hinaus kann das Verfahren das Prüfen der Informationen zu der zumindest einen Verteilscheibe hinsichtlich eines geeigneten Scheibentyps, eines geeigneten Scheibenzustands und/oder einer geeigneten Scheibenkonfiguration für den beabsichtigten Ausbringvorgang umfassen. Wenn die Prüfung ergibt, dass der verwendete Scheibentyp, der eingestellte Scheibenzustand und/oder die vorgenommene Scheibenkonfiguration für den geplanten Ausbringvorgang nicht geeignet sind, kann das Verfahren ferner das Ausgeben einer akustischen und/oder optischen Warnmeldung umfassen. Auf diese Weise kann der Benutzer darauf hingewiesen werden, dass ein falscher Scheibentyp montiert ist oder der Zustand und/oder die Konfiguration der verwendeten Verteilscheibe nicht korrekt ist.

Das erfindungsgemäße Verfahren sieht vor, dass das Erfassen von Informationen zu der zumindest einen Verteilscheibe das Berechnen eines Frequenzspektrums des zumindest einen Sensorsignals, welches von der Abwurfcharakteristik des Streuguts abhängig ist, und das Erfassen von Eigenschaften des berechneten Frequenzspektrums, umfasst. Zusätzlich umfasst das Erfassen von Informationen zu der zumindest einen Verteilscheibe das Ableiten von Informationen zu der zumindest einen Verteilscheibe aus dem berechneten Frequenzspektrum und/oder den erfassten Eigenschaften des Frequenzspektrums. Das Erfassen von Informationen zu der zumindest einen Verteilscheibe kann außerdem das Vergleichen des berechneten Frequenzspektrums mit Referenzspektren umfassen, wobei den Referenzspektren jeweils Informationen zu der zumindest einen Verteilscheibe zugeordnet sind. Ferner kann das Erfassen von Informationen zu der zumindest einen Verteilscheibe das Vergleichen der erfassten Eigenschaften des berechneten Frequenzspektrums mit Referenzwerten umfassen, wobei den Referenzwerten jeweils Informationen zu der zumindest einen Verteilscheibe zugeordnet sind. Jeder Scheibentyp weist ein charakteristisches Frequenzspektrum auf, sodass über das berechnete Frequenzspektrum der eingesetzte Scheibentyp bestimmt werden kann. Das berechnete Frequenzspektrum kann vor dem Vergleich mit Referenzspektren normiert werden, beispielsweise auf das Amplitudenmaximum und/oder einen vorgegebenen Frequenzbereich durch die Normierung des berechneten Frequenzspektrums wird der Spektrenvergleich erheblich vereinfacht. Das Vergleichen des berechneten Frequenzspektrums mit Referenzspektren kann auf einen vorgegebenen Frequenzbereich beschränkt sein. Das Ableiten von Informationen zu der zumindest einen Verteilscheibe aus dem berechneten Frequenzspektrum und/oder den erfassten Eigenschaften des Frequenzspektrums kann das Klassifizieren des berechneten Frequenzspektrums und/oder der erfassten Eigenschaften des Frequenzspektrums umfassen. Die Referenzspektren und/oder die Referenzwerte, mit welchen das berechnete Frequenzspektrum bzw. die erfassten Eigenschaften des berechneten Frequenzspektrums verglichen werden, können beispielsweise auf einer Speichereinrichtung hinterlegt sein. Die Speichereinrichtung kann eine geräteinterne Speichereinrichtung des landwirtschaftlichen Streugeräts oder eine externe Speichereinrichtung sein, auf welche das landwirtschaftliche Streugerät zugreifen kann. Auf der Speichereinrichtung können Referenzspektren zu mehreren Scheibentypen, Scheibenzuständen und/oder Scheibenkonfigurationen hinterlegt sein. Auf der Speichereinrichtung können Referenzwerte zu mehreren Scheibentypen, Scheibenzuständen und/oder Scheibenkonfigurationen hinterlegt sein. Die Eigenschaften des berechneten Frequenzspektrums können charakteristische Frequenzparameter umfassen, wie beispielsweise die Amplitudenmaxima und/oder die den jeweiligen Amplitudenmaxima zugeordneten Frequenzwerte.

In einer anderen Ausführungsform des erfindungsgemäßen Verfahrens erfolgt ein Überprüfen, ob die erfassten Informationen zu der zumindest einen Verteilscheibe zu erwartenden Informationen zu der zumindest einen Verteilscheibe entsprechen. Alternativ oder zusätzlich umfasst das Verfahren das Ausgeben eines optischen und/oder akustischen Hinweises, wenn die erfassten Informationen zu der zumindest einen Verteilscheibe von den zu erwartenden Informationen zu der zumindest einen Verteilscheibe abweichen. Auf diese Weise kann der Benutzer darauf hingewiesen werden, dass der montierte Scheibentyp, der Scheibenzustand und/oder die Scheibenkonfiguration für den geplanten Streuvorgang nicht oder nur bedingt geeignet sind. Das Verfahren kann auch das Ausgeben eines optischen und/oder akustischen Hinweises umfassen, dass die erfassten Informationen zu der zumindest einen Verteilscheibe mit den zu erwartenden Informationen zu der zumindest einen Verteilscheibe übereinstimmen. Auf diese Weise kann dem Benutzer positiv bestätigt werden, dass der montierte Scheibentyp korrekt ist und/oder die Verteilscheibe einen korrekten Zustand und/oder eine geeignete Konfiguration aufweist.

In einer Weiterbildung des erfindungsgemäßen Verfahrens werden durch die Erfassungseinrichtung Informationen zu dem Betriebszustand der zumindest einen Verteilscheibe und/oder des landwirtschaftlichen Streugeräts erfasst. Das Erfassen von Informationen zu dem Betriebszustand der zumindest einen Verteilscheibe und/oder des landwirtschaftlichen Streugeräts durch die Erfassungseinrichtung erfolgt auf Grundlage des zumindest einen Sensorsignals, welches von der Abwurfcharakteristik des Streuguts abhängig ist. Die Informationen zu dem Betriebszustand der zumindest einen Verteilscheibe können die aktuelle Drehzahl der zumindest einen Verteilscheibe betreffen. Die Informationen zu dem Betriebszustand des landwirtschaftlichen Streugeräts können die aktuelle Fahrgeschwindigkeit oder die Geschwindigkeit über den Boden des landwirtschaftlichen Streugeräts betreffen. Das Erfassen von Informationen zu dem Betriebszustand der zumindest einen Verteilscheibe kann in analoger Weise zu dem Erfassen von Informationen zu der zumindest einen Verteilscheibe erfolgen.

Erfindungsgemäß erfolgt ein selbsttätiges Einstellen von Einstellparametern des landwirtschaftlichen Streugeräts in Abhängigkeit der erfassten Informationen zu der zumindest einen Verteilscheibe durch das landwirtschaftliche Streugerät. Die Einstellparameter können die Drehzahl der zumindest einen Verteilscheibe, die Arbeitsbreite und/oder die Schaufelstellung und/oder -position bzw. die Stellung und/oder die Position der Leitelemente umfassen. Insbesondere können die Einstellparameter auch den Abwurfwinkel der zumindest einen Verteilscheibe umfassen.

Die der Erfindung zugrundeliegende Aufgabe wird ferner durch ein landwirtschaftliches Streugerät gemäß Anspruch 8 gelöst.

In einer bevorzugten Ausführungsform des erfindungsgemäßen landwirtschaftlichen Streugeräts umfasst dieses einen oder mehrere Sensoren, welche dazu eingerichtet sind, das zumindest eine Sensorsignal bereitzustellen, welches von der Abwurfcharakteristik des Streuguts abhängig ist, wobei der eine oder die mehreren Sensoren beabstandet von der zumindest einen Verteilscheibe und insbesondere im Bereich eines Vorratsbehälters für Streugut des landwirtschaftlichen Streugeräts angeordnet sind. Der eine oder die mehreren Sensoren können als Radarsensoren ausgebildet sein. Ferner kann der eine oder können die mehreren Sensoren als optische Sensoren ausgebildet sein. Insbesondere ist der eine oder sind die mehreren Sensoren nicht im Nahbereich der zumindest einen Verteilscheibe angeordnet.

Außerdem wird das erfindungsgemäße landwirtschaftliche Streugerät durch eine Speichereinrichtung vorteilhaft weitergebildet, wobei auf der Speichereinrichtung Referenzwerte und/oder Referenzspektren zum Vergleich mit dem zumindest einen Sensorsignal, welches von der Abwurfcharakteristik des Streuguts abhängig ist, gespeichert sind. Den Referenzwerten und/oder Referenzspektren sind jeweils Informationen zu der zumindest einen Verteilscheibe zugeordnet. Vorzugsweise sind auf der Speichereinrichtung Referenzspektren zu mehreren Scheibentypen, Scheibenzuständen und/oder Scheibenkonfigurationen hinterlegt. Vorzugsweise sind auf der Speichereinrichtung Referenzwerte zu mehreren Scheibentypen, Scheibenzuständen und/oder Scheibenkonfigurationen hinterlegt. Die Referenzwerte können beispielsweise charakteristische Frequenzparameter betreffen, beispielsweise Amplitudenmaxima und/oder die den jeweiligen Amplitudenmaxima zugeordneten Frequenzwerte.

Das erfindungsgemäße landwirtschaftliche Streugerät wird ferner dadurch vorteilhaft weitergebildet, dass es dazu eingerichtet ist, mit dem Verfahren zum Betreiben eines landwirtschaftlichen Streugeräts nach einer der vorstehend beschriebenen Ausführungsformen betrieben zu werden. Hinsichtlich weiterer Vorteile und Modifikationen des landwirtschaftlichen Streugeräts wird somit auf die Vorteile und Modifikationen des erfindungsgemäßen Verfahrens zum Betreiben eines landwirtschaftlichen Streugeräts verwiesen.

Weitere Einzelheiten der Erfindung sind der Figurenbeschreibung und den Zeichnungen zu entnehmen. Es zeigen
- Fig. 1: ein Ausführungsbeispiel des erfindungsgemäßen landwirtschaftlichen Streugeräts in einer Seitenansicht;

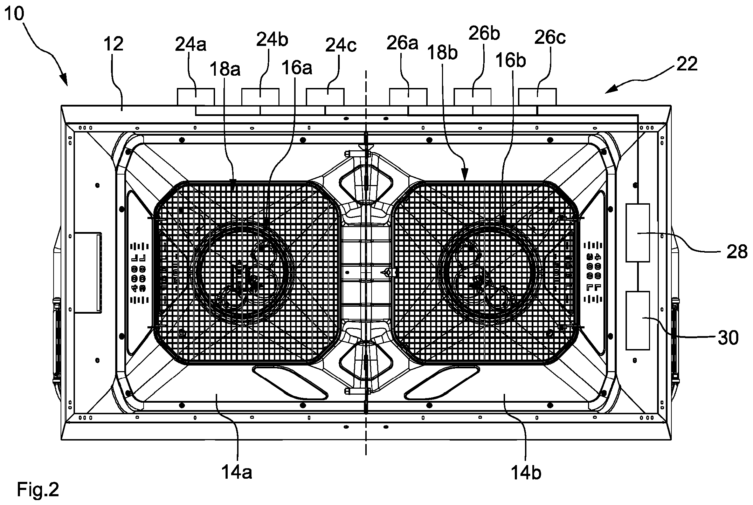

- Fig. 2: das in der Fig. 1 dargestellte landwirtschaftliche Streugerät in einer Draufsicht;
- Fig. 3: ein Frequenzspektrum eines Sensorsignals, welches von der Abwurfcharakteristik eines Streuguts abhängig ist;
- Fig. 4: ein Frequenzspektrum eines weiteren Sensorsignals, welches von der Abwurfcharakteristik eines Streuguts abhängig ist; und
- Fig. 5: ein Frequenzspektrum eines weiteren Sensorsignals, welches von der Abwurfcharakteristik eines Streuguts abhängig ist.

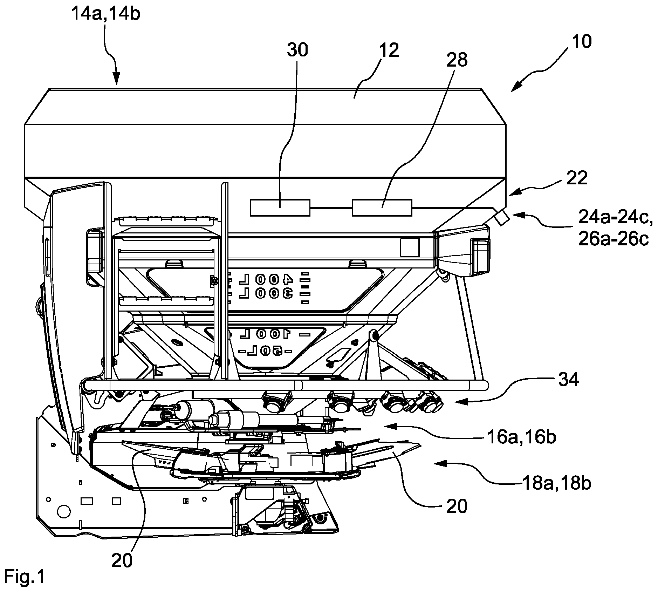

Die Fig. 1 zeigt ein als Zweischeiben-Düngerstreuer ausgebildetes landwirtschaftliches Streugerät 10.

Das landwirtschaftliche Streugerät 10 umfasst einen Vorratsbehälter 12 für das auszubringende Streugut. Der Vorratsbehälter 12 weist zwei nebeneinander angeordnete Vorratsbereiche 14a, 14b auf.

Das in dem Vorratsbehälter 14a befindliche Streugut wird über ein Dosierorgan 16a dosiert, bevor es auf eine Verteilscheibe 18a aufgegeben wird. Die Verteilscheibe 18a ist rotierend antreibbar und dazu eingerichtet, das auf die Verteilscheibe 18a aufgegebene Streugut zu beschleunigen und in Form eines Streufächers abzuwerfen. Auf der Verteilscheibe 18a sind als Wurfschaufeln ausgebildete verstellbare Leitelemente 20 angeordnet. Über eine Verstellung der Leitelemente 20 lässt sich das Wurfbild des von der Verteilscheibe 18a abgeworfenen Streuguts beeinflussen.

Das in dem Vorratsbehälter 14b befindliche Streugut wird über ein Dosierorgan 16b dosiert, bevor es auf eine Verteilscheibe 18b aufgegeben wird. Die Verteilscheibe 18b ist rotierend antreibbar und dazu eingerichtet, dass auf die Verteilscheibe 18b aufgegebene Streugut zu beschleunigen und in Form eines Streufächers abzuwerfen. Auf der Verteilscheibe 18b sind als Wurfschaufeln ausgebildete verstellbare Leitelemente 20 angeordnet. Über eine Verstellung der Leitelemente 20 lässt sich das Wurfbild des von der Verteilscheibe 18b abgeworfenen Streuguts beeinflussen.

Das landwirtschaftliche Streugerät 10 weist außerdem eine Erfassungseinrichtung 22 auf, welche dazu eingerichtet ist, Informationen zu den Verteilscheiben 18a, 18b zu erfassen. Die Erfassungseinrichtung weist eine erste Gruppe von Sensoren 24a-24c und eine zweite Gruppe von Sensoren 26a-26c auf, wobei die Sensoren 24a-24c, 26a-26c signalleitend mit einer Recheneinheit 28 verbunden sind. Die Recheneinheit 28 ist außerdem signalleitend mit einer Speichereinrichtung 30 verbunden.

Die Erfassungseinrichtung 22 ist dazu eingerichtet, die Informationen zu den Verteilscheiben 18a, 18b des landwirtschaftlichen Streugeräts 10 auf Grundlage der Sensorsignale der Sensoren 24a-24c, 26a-26c zu erfassen, wobei die Sensorsignale der Sensoren 24a-24c, 26a-26c von der Abwurfcharakteristik des Streuguts abhängig sind.

Die Sensoren 24a-24c sind als Radarsensoren ausgebildet und jeweils dazu eingerichtet, ein Sensorsignal bereitzustellen, welches von der Abwurfcharakteristik des von der Verteilscheibe 18a abgeworfenen Streuguts anhängig ist. Die Sensoren 24a-24c sind beabstandet von der Verteilscheibe 18a angeordnet und an der Bewandung des Vorratsbereichs 14a des Vorratsbehälters 12 für Streugut des landwirtschaftlichen Streugeräts 10 befestigt.

Die Sensoren 26a-26c sind als Radarsensoren ausgebildet und jeweils dazu eingerichtet, ein Sensorsignal bereitzustellen, welches von der Abwurfcharakteristik des von der Verteilscheibe 18b abgeworfenen Streuguts anhängig ist. Die Sensoren 26a-26c sind beabstandet von der Verteilscheibe 18b angeordnet und an der Bewandung des Vorratsbereichs 14b des Vorratsbehälters 12 für Streugut des landwirtschaftlichen Streugeräts 10 befestigt.

Auf der Speichereinrichtung 30 sind Referenzspektren hinterlegt, wobei den hinterlegten Referenzspektren jeweils Informationen zu einer Verteilscheibe zugeordnet sind. Die Informationen zu den Verteilscheiben sind ebenfalls auf der Speichereinrichtung 30 hinterlegt. Die Recheneinheit 28 ist dazu ausgebildet, die von der Abwurfcharakteristik des Streuguts anhängigen Sensorsignale der Sensoren 24a-24c, 26a-26c mit den hinterlegten Referenzspektren zu vergleichen. Wenn das Frequenzspektrum 32a-32c eines Sensorsignals mit einem hinterlegten Referenzspektrum übereinstimmt oder diesem zumindest stark ähnelt, werden die Informationen zu einer Verteilscheibe, welche dem Referenzspektrum zugeordnet sind, der Gerätesteuerung des Streugeräts 10 bereitgestellt. Die Informationen können dabei beispielsweise Angaben zu dem Scheibentyp, dem Scheibenzustand und/oder der Scheibenkonfiguration umfassen.

Auf Grundlage dieser Informationen kann die Streugutverteilung während des Streuvorgangs in geeigneter Weise angepasst werden, beispielsweise durch Anpassung der Scheibendrehzahl oder des Abwurfwinkels, wenn über die Sensoren 34 festgestellt wird, das die tatsächliche Streugutverteilung nicht der beabsichtigten Streugutverteilung entspricht.

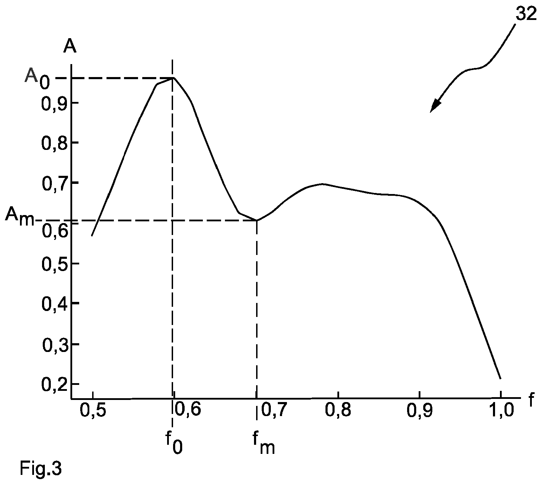

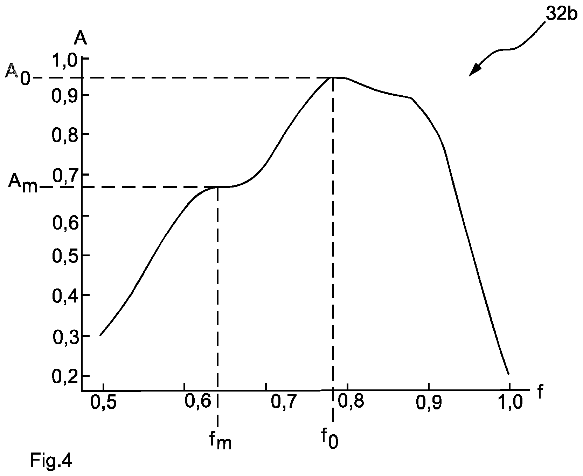

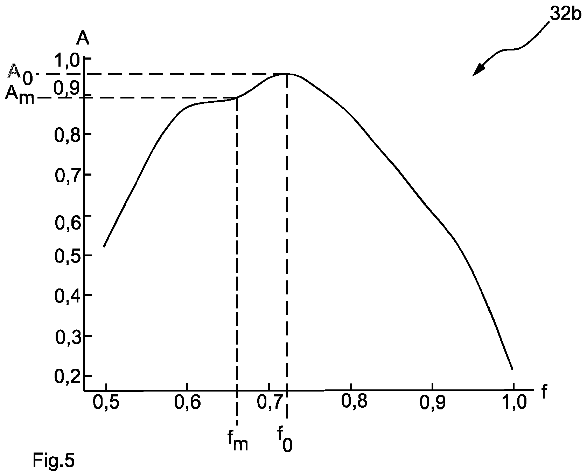

Die Fig. 3 bis 5 zeigen Frequenzspektren 32a-32c unterschiedlicher Sensorsignale eines landwirtschaftlichen Streugeräts 10, welche von der Abwurfcharakteristik des Streuguts abhängig ist. Die Frequenzspektren 32a-32c zeigen die Signalamplitude A über der Frequenz f.

Die zugehörigen Sensorsignale wurden bei Streuvorgängen mit unterschiedlichen Verteilscheiben 18a, 18b aufgezeichnet. Da jeder Scheibentyp ein charakteristisches Frequenzspektrum 32a-32c aufweist, lässt sich über das berechnete Frequenzspektrum 32a-32c der eingesetzte Scheibentyp bestimmen.

Zunächst wird hierzu ein Sensorsignal, welches von der Abwurfcharakteristik des Streuguts abhängig ist, mittels eines oder mehrerer Sensoren 24a-24c, 26a-26c des landwirtschaftlichen Streugeräts 10 erzeugt. Auf Grundlage des Sensorsignals wird dann ein Frequenzspektrums 32a-32c berechnet. Das berechnete Frequenzspektrum kann beispielsweise auf das Amplitudenmaximum normiert und/oder auf einen vorgegebenen Frequenzbereich beschränkt werden.

Nach der Berechnung des Frequenzspektrums 32a-32c werden dann Eigenschaften des berechneten Frequenzspektrums 32a-32c erfasst. Die Eigenschaften des berechneten Frequenzspektrums 32a-32c können beispielsweise charakteristische Frequenzparameter umfassen.

In den Fig. 3 bis 5 sind beispielhaft die Amplitudenmaxima A₀ und die den Amplitudenmaxima A₀ zugeordneten Frequenzwerte f₀ sowie die Amplitudenwerte Aₘ im Bereich einer Amplitudensenke und die diesen Amplitudenwerten Aₘ zugeordneten Frequenzwerte fₘ als Eigenschaften der jeweiligen Frequenzspektren 32a-32c dargestellt.

Die Amplitudenmaxima A₀ und deren Frequenzwerte f₀ sowie die Amplitudenwerte Aₘ und deren Frequenzwerte fₘ werden dann mit hinterlegten Referenzwerten verglichen. Den Referenzwerten sind jeweils Informationen zu einem Scheibentyp zugeordnet. Durch einen Vergleich der charakteristischen Frequenzparameter kann somit ermittelt werden, welcher Scheibentyp momentan an dem landwirtschaftlichen Streugerät 10 montiert ist.

Ferner kann nach dem Erfassen der Scheibeninformationen noch geprüft werden, ob die erfassten Informationen zu der Verteilscheibe 18a, 18b zu erwartenden Informationen zu der Verteilscheibe 18a, 18b entsprechen. Wenn beispielsweise eine für den Streuvorgang ungeeignete Verteilscheibe 18a, 18b montiert wurde, kann ein entsprechender optischer oder akustischer Hinweis ausgegeben werden. Ferner kann auch ein optischer oder akustischer Hinweis ausgegeben werden, wenn eine geeignete Verteilscheibe 18a, 18b montiert ist.

Die zur Verfügung stehenden und von der Abwurfcharakteristik des Streuguts abhängigen Sensorsignale können außerdem verwendet werden, um Informationen zu dem Betriebszustand der Verteilscheibe 18a, 18b und/oder des landwirtschaftlichen Streugeräts 10 zu erfassen. Die Informationen zu dem Betriebszustand der Verteilscheibe 18a, 18b können beispielsweise die aktuelle Drehzahl der Verteilscheibe 18a, 18b betreffen. Die Informationen zu dem Betriebszustand des landwirtschaftlichen Streugeräts 10 können beispielsweise die aktuelle Fahrgeschwindigkeit des landwirtschaftlichen Streugeräts 10 betreffen.

Da nun auf Grundlage der Informationen zu der Verteilscheibe 18a, 18b geeignete Einstellparameter zur situationsadäquaten Anpassung der Streugutausbringung ermittelbar sind, kann ein selbsttätiges Einstellen der Einstellparameter des landwirtschaftlichen Streugeräts 10 durch das landwirtschaftliche Streugerät 10 während des Ausführens des Streuvorgangs erfolgen. Somit wird während des gesamten Streuvorgangs das beabsichtigte Streuergebnis umgesetzt. Eine manuelle Eingabe des verwendeten Scheibentyps durch den Benutzer ist nicht notwendig.

### Bezugszeichenliste

- 10: Streugerät
- 12: Vorratsbehälter
- 14a, 14b: Vorratsbereiche
- 16a, 16b: Dosierorgane
- 18a, 18b: Verteilscheiben
- 20: Leitelemente
- 22: Erfassungseinrichtung
- 24a-24c: Sensoren
- 26a-26c: Sensoren
- 28: Recheneinheit
- 30: Speichereinrichtung
- 32a-32c: Frequenzspektrum
- 34: Sensoren

- A: Amplitude
- A₀: Amplitudenmaximum
- Aₘ: Amplitudenwerte
- f: Frequenz
- f₀: Frequenzwert
- fₘ: Frequenzwert

## Patentansprüche

1. Verfahren zum Betreiben eines landwirtschaftlichen Streugeräts (10), mit dem Schritt:
- Erfassen von Informationen zu zumindest einer rotierend antreibbaren Verteilscheibe (18a, 18b) des landwirtschaftlichen Streugeräts (10) durch eine Erfassungseinrichtung (22) des landwirtschaftlichen Streugeräts (10); wobei
die Informationen zu der zumindest einen Verteilscheibe (18a, 18b) Informationen zu dem Scheibentyp, dem Scheibenzustand und/oder der Scheibenkonfiguration umfassen und das Erfassen von Informationen zu der zumindest einen rotierend antreibbaren Verteilscheibe (18a, 18b) des landwirtschaftlichen Streugeräts (10) durch die Erfassungseinrichtung (22) des landwirtschaftlichen Streugeräts (10) auf Grundlage zumindest eines Sensorsignals erfolgt, welches von der Abwurfcharakteristik des Streuguts abhängig ist,
wobei das Erfassen von den Informationen zu der zumindest einen Verteilscheibe (18a, 18b) die folgenden Schritte umfasst:
- Berechnen eines Frequenzspektrums (32a-32c) des zumindest einen Sensorsignals, welches von der Abwurfcharakteristik des Streuguts abhängig ist;
- Erfassen von Eigenschaften des berechneten Frequenzspektrums (32a-32c);
- Ableiten von den Informationen zu der zumindest einen Verteilscheibe (18a, 18b) aus dem berechneten Frequenzspektrum (32a-32c) und/oder den erfassten Eigenschaften des Frequenzspektrums (32a-32c), und dem Schritt:
- selbstständiges Einstellen von Einstellparametern des landwirtschaftlichen Streugeräts (10) in Abhängigkeit der erfassten Informationen zu der zumindest einen Verteilscheibe (18a, 18b) durch das landwirtschaftliche Streugerät (10).

2. Verfahren nach Anspruch 1,
**gekennzeichnet durch** den Schritt:
- Erzeugen des zumindest einen Sensorsignals, welches von der Abwurfcharakteristik des Streuguts abhängig ist, mittels eines oder mehrerer Sensoren (24a-24c, 26a-26c) des landwirtschaftlichen Streugeräts (10).

3. Verfahren nach einem der vorstehenden Ansprüche, **dadurch gekennzeichnet, dass** das Erfassen von den Informationen zu der zumindest einen Verteilscheibe (18a, 18b) zumindest einen der folgenden Schritte umfasst:
- Vergleichen des berechneten Frequenzspektrums (32a-32c) mit Referenzspektren, wobei den Referenzspektren jeweils die Informationen zu der zumindest einen Verteilscheibe (18a, 18b) zugeordnet sind;
- Vergleichen der erfassten Eigenschaften des berechneten Frequenzspektrums (32a-32c) mit Referenzwerten, wobei den Referenzwerten jeweils die Informationen zu der zumindest einen Verteilscheibe (18a, 18b) zugeordnet sind.

4. Verfahren nach einem der vorstehenden Ansprüche,
**dadurch gekennzeichnet, dass** das Erfassen von den Informationen zu der zumindest einen Verteilscheibe (18a, 18b) die folgenden Schritte umfasst:
- Auswerten des zumindest einen Sensorsignals, welches von der Abwurfcharakteristik des Streuguts abhängig ist;
- Erfassen von Signaleigenschaften des zumindest einen Sensorsignals, welches von der Abwurfcharakteristik des Streuguts abhängig ist.

5. Verfahren nach Anspruch 4, **dadurch gekennzeichnet, dass** das Erfassen von den Informationen zu der zumindest einen Verteilscheibe (18a, 18b) zumindest einen der folgenden Schritte umfasst:
- Ableiten von den Informationen zu der zumindest einen Verteilscheibe (18a, 18b) aus den erfassten Signaleigenschaften;
- Vergleichen der erfassten Signaleigenschaften mit Referenzwerten, wobei den Referenzwerten jeweils die Informationen zu der zumindest einen Verteilscheibe (18a, 18b) zugeordnet sind.

6. Verfahren nach einem der vorstehenden Ansprüche,
**gekennzeichnet durch** zumindest einen der folgenden Schritte:
- Überprüfen, ob die erfassten Informationen zu der zumindest einen Verteilscheibe (18a, 18b) zu erwartenden Informationen zu der zumindest einen Verteilscheibe (18a, 18b) entsprechen;
- Ausgeben eines optischen oder akustischen Hinweises, wenn die erfassten Informationen zu der zumindest einen Verteilscheibe (18a, 18b) von den zu erwartenden Informationen zu der zumindest einen Verteilscheibe (18a, 18b) abweichen.

7. Verfahren nach einem der vorstehenden Ansprüche,
**gekennzeichnet durch** den Schritt:
- Erfassen von den Informationen zu dem Betriebszustand der zumindest einen Verteilscheibe (18a, 18b) und/oder des landwirtschaftlichen Streugeräts (10) durch die Erfassungseinrichtung (22);
**dadurch gekennzeichnet, dass** das Erfassen von den Informationen zu dem Betriebszustand der zumindest einen Verteilscheibe (18a, 18b) und/oder des landwirtschaftlichen Streugeräts (10) durch die Erfassungseinrichtung (22) auf Grundlage des zumindest einen Sensorsignals erfolgt, welches von der Abwurfcharakteristik des Streuguts abhängig ist.

8. Landwirtschaftliches Streugerät (10), insbesondere Düngerstreuer, mit
- zumindest einer rotierend antreibbaren Verteilscheibe (18a, 18b); und
- einer Erfassungseinrichtung (22), welche dazu eingerichtet ist, Informationen zu der zumindest einen Verteilscheibe (18a, 18b) zu erfassen; wobei
die Informationen zu der zumindest einen Verteilscheibe (18a, 18b) Informationen zu dem Scheibentyp, dem Scheibenzustand und/oder der Scheibenkonfiguration umfassen, und die Erfassungseinrichtung (22) dazu eingerichtet ist, die Informationen zu der zumindest einen rotierend antreibbaren Verteilscheibe (18a, 18b) des landwirtschaftlichen Streugeräts (10) auf Grundlage zumindest eines Sensorsignals zu erfassen, welches von der Abwurfcharakteristik des Streuguts abhängig ist,
wobei die Erfassungseinrichtung (22) eingerichtet ist, zum Erfassen von den Informationen zu der zumindest einen Verteilscheibe (18a, 18b)
- ein Frequenzspektrum (32a-32c) des zumindest einen Sensorsignals, welches von der Abwurfcharakteristik des Streuguts abhängig ist, zu berechnen;
- Eigenschaften des berechneten Frequenzspektrums (32a-32c) zu erfassen;
- die Informationen zu der zumindest einen Verteilscheibe (18a, 18b) aus dem berechneten Frequenzspektrum (32a-32c) und/oder den erfassten Eigenschaften des Frequenzspektrums (32a-32c) abzuleiten, und wobei das landwirtschaftliche Streugerät (10) zum selbstständigen Einstellen von Einstellparametern in Abhängigkeit der erfassten Informationen zu der zumindest einen Verteilscheibe (18a, 18b) eingerichtet ist.

9. Landwirtschaftliches Streugerät (10) nach Anspruch 8, **dadurch gekennzeichnet, dass** die Erfassungseinrichtung (22) eingerichtet ist, zum Erfassen von den Informationen zu der zumindest einen Verteilscheibe (18a, 18b)
- Vergleichen des berechneten Frequenzspektrums (32a-32c) mit Referenzspektren, wobei den Referenzspektren jeweils die Informationen zu der zumindest einen Verteilscheibe (18a, 18b) zugeordnet sind; und/oder
- Vergleichen der erfassten Eigenschaften des berechneten Frequenzspektrums (32a-32c) mit Referenzwerten, wobei den Referenzwerten jeweils die Informationen zu der zumindest einen Verteilscheibe (18a, 18b) zugeordnet sind.

10. Landwirtschaftliches Streugerät (10) nach einem der Ansprüche 8 oder 9,
**gekennzeichnet durch** einen oder mehrere Sensoren (24a-24c, 26a-26c), welche dazu eingerichtet sind, das zumindest eine Sensorsignal bereitzustellen, welches von der Abwurfcharakteristik des Streuguts anhängig ist,
wobei der eine oder die mehreren Sensoren (24a-24c, 26a-26c) beabstandet von der zumindest einen Verteilscheibe (18a, 18b) und insbesondere im Bereich eines Vorratsbehälters (12) für Streugut des landwirtschaftlichen Streugeräts (10) angeordnet sind.

11. Landwirtschaftliches Streugerät (10) nach einem der Ansprüche 8 bis 10, **gekennzeichnet durch** eine Speichereinrichtung (30), wobei auf der Speichereinrichtung (30) Referenzwerte und/oder Referenzspektren zum Vergleich mit dem zumindest einen Sensorsignal, welches von der Abwurfcharakteristik des Streuguts abhängig ist, gespeichert sind, wobei den Referenzwerten und/oder Referenzspektren jeweils die Informationen zu der zumindest einen Verteilscheibe (18a, 18b) zugeordnet sind.

12. Landwirtschaftliches Streugerät (10) nach einem der Ansprüche 8 bis 11, **dadurch gekennzeichnet, dass** das landwirtschaftliche Streugerät (10) Mittel aufweist, die eingerichtet sind, mit dem Verfahren zum Betreiben eines landwirtschaftlichen Streugeräts (10) nach einem der Ansprüche 1 bis 7 betrieben zu werden.

## Claims

1. Method for operating an agricultural spreader device (10), comprising the step:
- acquiring information on at least one distributor disc (18a, 18b), which can be driven in rotation, of the agricultural spreader device (10) by means of a sensing device (22) of the agricultural spreader device (10); wherein
the information on the at least one distributor disc (18a, 18b) comprises information on the disc type, the disc condition and/or the disc configuration, and the acquisition of information on the at least one distributor disc (18a, 18b), which can be driven in rotation, of the agricultural spreader device (10) by the sensing device (22) of the agricultural spreader device (10) is carried out on the basis of at least one sensor signal which is dependent on the ejection characteristic of the spreading material,
wherein
the sensing of the information on the at least one distributor disc (18a, 18b) comprises the following steps:
- calculating a frequency spectrum (32a-32c) of the at least one sensor signal, which spectrum is dependent on the ejection characteristic of the spreading material;
- sensing properties of the calculated frequency spectrum (32a-32c);
- deriving the information on the at least one distributor disc (18a, 18b) from the calculated frequency spectrum (32a-32c) and/or the acquired properties of the frequency spectrum (32a-32c), and the step:
- independent adjustment of adjustment parameters of the agricultural spreader device (10) in accordance with the acquired information on the at least one distributor disc (18a, 18b) by means of the agricultural spreader device (10).

2. Method according to Claim 1,
**characterized by** the step:
- generating the at least one sensor signal which is dependent on the ejection characteristic of the spreading material, by means of one or more sensors (24a-24c, 26a-26c) of the agricultural spreader device (10).

3. Method according to either of the preceding claims, **characterized in that** the acquisition of the information on the at least one distributor disc (18a, 18b) comprises at least one of the following steps:
- comparing the calculated frequency spectrum (32a-32c) with reference spectra, wherein the reference spectra are each assigned the information on the at least one distributor disc (18a, 18b);
- comparing the acquired properties of the calculated frequency spectrum (32a-32c) with reference values, wherein the reference values are each assigned the information on the at least one distributor disc (18a, 18b).

4. Method according to one of the preceding claims, **characterized in that** the acquisition of the information on the at least one distributor disc (18a, 18b) comprises the following steps:
- evaluating the at least one sensor signal which is dependent on the ejection characteristic of the spreading material;
- acquiring signal properties of the at least one sensor signal which is dependent on the ejection characteristic of the spreading material.

5. Method according to Claim 4, **characterized in that** the acquisition of the information on the at least one distributor disc (18a, 18b) comprises at least one of the following steps:
- deriving the information on the at least one distributor disc (18a, 18b) from the acquired signal properties;
- comparing the acquired signal properties with reference values, wherein the reference values are each assigned the information on the at least one distributor disc (18a, 18b).

6. Method according to one of the preceding claims, **characterized by** at least one of the following steps:
- checking whether the acquired information on the at least one distributor disc (18a, 18b) corresponds to expected information on the at least one distributor disc (18a, 18b);
- outputting a visual or acoustic message if the acquired information on the at least one distributor disc (18a, 18b) differs from the expected information on the at least one distributor disc (18a, 18b).

7. Method according to one of the preceding claims, **characterized by** the step:
- acquiring the information on the operating status of the at least one distributor disc (18a, 18b) and/or the agricultural spreader device (10) by means of the sensing device (22) ;
**characterized in that** the acquisition of the information on the operating status of the at least one distributor disc (18a, 18b) and/or the agricultural spreader device (10) is carried out by the sensing device (22) on the basis of the at least one sensor signal which is dependent on the ejection characteristic of the spreading material.

8. Agricultural spreader device (10), in particular a fertilizer spreader, having
- at least one distributor disc (18a, 18b) which can be driven in rotation;
and
- a sensing device (22) which is configured to acquire information on the at least one distributor disc (18a, 18b); wherein
the information about the at least one distributor disc (18a, 18b) comprises information on the disc type, the disc condition and/or the disc configuration, and the sensing device (22) is configured to acquire the information on the at least one distributor disc (18a, 18b), which can be driven in rotation, of the agricultural spreader device (10) on the basis of at least one sensor signal which is dependent on the ejection characteristic of the spreader device, wherein, in order to acquire the information on the at least one distributor disc (18a, 18b), the sensing device (22) is configured
- to calculate a frequency spectrum (32a-32c) of the at least one sensor signal which is dependent on the ejection characteristic of the spreading material;
- to acquire properties of the calculated frequency spectrum (32a-32c);
- to derive information on the at least one distributor disc (18a, 18b) from the calculated frequency spectrum (32a-32c) and/or the acquired properties of the frequency spectrum (32a-32c), and wherein the agricultural spreader device (10) is configured to independently adjust adjustment parameters in accordance with the acquired information on the at least one distributor disc (18a, 18b).

9. Agricultural spreader device (10) according to Claim 8, **characterized in that** the sensing device (22) is configured to
- acquire the information on the at least one distributor disc (18a, 18b),
- compare the calculated frequency spectrum (32a-32c) with reference spectra, wherein the reference spectra are each assigned the information on the at least one distributor disc (18a, 18b); and/or
- compare the acquired properties of the calculated frequency spectrum (32a-32c) with reference values, wherein the reference values are each assigned the information on the at least one distributor disc (18a, 18b).

10. Agricultural spreader device (10) according to either of Claims 8 and 9,
**characterized by** one or more sensors (24a-24c, 26a-26c) which are configured to provide the at least one sensor signal which is dependent on the ejection characteristic of the spreading material, wherein the one or more sensors (24a-24c, 26a-26c) are arranged spaced apart from the at least one distributor disc (18a, 18b) and, in particular, in the region of a reservoir container (12) for spreading material of the agricultural spreader device (10).

11. Agricultural spreader device (10) according to one of Claims 8 to 10,
**characterized by** a storage device (30), wherein reference values and/or reference spectra, relating to the comparison with the at least one sensor signal which is dependent on the ejection characteristic of the spreading material, are stored on the storage device (30), wherein the reference values and/or reference spectra are each assigned the information on the at least one distributor disc (18a, 18b).

12. Agricultural spreader device (10) according to one of Claims 8 to 11,
**characterized in that** the agricultural spreader device (10) has means which are configured to be operated with the method for operating an agricultural spreader device (10) according to one of Claims 1 to 7.

## Revendications

1. Procédé permettant de faire fonctionner un appareil d'épandage agricole (10), comprenant l'étape consistant à :
- acquérir des informations concernant au moins un disque répartiteur à entraînement rotatif (18a, 18b) de l'appareil d'épandage agricole (10) par un dispositif d'acquisition (22) de l'appareil d'épandage agricole (10) ; dans lequel les informations concernant ledit au moins un disque répartiteur (18a, 18b) comprennent des informations concernant le type de disque, l'état de disque et/ou la configuration de disque, et l'acquisition d'informations concernant ledit au moins un disque répartiteur à entraînement rotatif (18a, 18b) de l'appareil d'épandage agricole (10) par le dispositif d'acquisition (22) de l'appareil d'épandage agricole (10) est effectuée sur la base d'au moins un signal de capteur qui dépend de la caractéristique de largage de la matière à épandre, dans lequel l'acquisition des informations concernant ledit au moins un disque répartiteur (18a, 18b) comprend les étapes suivantes consistant à :
- calculer un spectre de fréquences (32a à 32c) dudit au moins un signal de capteur qui dépend de la caractéristique de largage de la matière à épandre ;
- acquérir des propriétés du spectre de fréquences (32a à 32c) calculé ;
- déduire des informations concernant ledit au moins un disque répartiteur (18a, 18b) à partir du spectre de fréquences (32a à 32c) calculé et/ou des propriétés acquises du spectre de fréquences (32a à 32c), et l'étape consistant à :
- régler automatiquement des paramètres de réglage de l'appareil d'épandage agricole (10) en fonction des informations acquises concernant ledit au moins un disque répartiteur (18a, 18b) par l'appareil d'épandage agricole (10).

2. Procédé selon la revendication 1, **caractérisé par** l'étape consistant à :
- produire ledit au moins un signal de capteur qui dépend de la caractéristique de largage de la matière à épandre au moyen d'un ou de plusieurs capteurs (24a à 24c, 26a à 26c) de l'appareil d'épandage agricole (10).

3. Procédé selon l'une quelconque des revendications précédentes, **caractérisé en ce que** l'acquisition des informations concernant ledit au moins un disque répartiteur (18a, 18b) comprend au moins l'une des étapes suivantes consistant à :
- comparer le spectre de fréquences (32a à 32c) calculé avec des spectres de référence, les informations dudit au moins un disque répartiteur (18a, 18b) étant respectivement associées aux spectres de référence ;
- comparer les propriétés acquises du spectre de fréquences (32a à 32c) calculé avec des valeurs de référence, les informations concernant ledit au moins un disque répartiteur (18a, 18b) étant respectivement associées aux valeurs de référence.

4. Procédé selon l'une quelconque des revendications précédentes, **caractérisé en ce que** l'acquisition des informations concernant ledit au moins un disque répartiteur (18a, 18b) comprend les étapes suivantes consistant à :
- évaluer ledit au moins un signal de capteur qui dépend de la caractéristique de largage de la matière à épandre ;
- acquérir des propriétés de signal dudit au moins un signal de capteur qui dépend de la caractéristique de largage de la matière à épandre.

5. Procédé selon la revendication 4, **caractérisé en ce que** l'acquisition des informations concernant ledit au moins un disque répartiteur (18a, 18b) comprend au moins l'une des étapes suivantes consistant à :
- déduire les informations concernant ledit au moins un disque répartiteur (18a, 18b) à partir des propriétés de signal acquises ;
- comparer les propriétés de signal acquises avec des valeurs de référence, les informations concernant ledit au moins un disque répartiteur (18a, 18b) étant respectivement associées aux valeurs de référence.

6. Procédé selon l'une quelconque des revendications précédentes, **caractérisé par** au moins l'une des étapes suivantes consistant à :
- vérifier si les informations acquises concernant ledit au moins un disque répartiteur (18a, 18b) correspondent à des informations attendues concernant ledit au moins un disque répartiteur (18a, 18b) ;
- émettre une indication optique ou acoustique si les informations acquises concernant ledit au moins un disque répartiteur (18a, 18b) diffèrent des informations attendues concernant ledit au moins un disque répartiteur (18a, 18b).

7. Procédé selon l'une quelconque des revendications précédentes, **caractérisé par** l'étape consistant à :
- acquérir les informations concernant l'état de fonctionnement dudit au moins un disque répartiteur (18a, 18b) et/ou de l'appareil d'épandage agricole (10) par le dispositif d'acquisition (22) ;
**caractérisé en ce que** l'acquisition des informations concernant l'état de fonctionnement dudit au moins un disque répartiteur (18a, 18b) et/ou de l'appareil d'épandage agricole (10) par le dispositif d'acquisition (22) est effectuée sur la base dudit au moins un signal de capteur qui dépend de la caractéristique de largage de la matière à épandre.

8. Appareil d'épandage agricole (10), en particulier épandeur d'engrais, comprenant
- au moins un disque répartiteur à entraînement rotatif (18a, 18b) ; et
- un dispositif d'acquisition (22) qui est conçu pour acquérir des informations concernant ledit au moins un disque répartiteur (18a, 18b) ;
dans lequel les informations concernant ledit au moins un disque répartiteur (18a, 18b) comprennent des informations concernant le type de disque, l'état de disque et/ou la configuration de disque, et le dispositif d'acquisition (22) est conçu pour acquérir les informations concernant ledit au moins un disque répartiteur à entraînement rotatif (18a, 18b) de l'appareil d'épandage agricole (10) sur la base d'au moins un signal de capteur qui dépend de la caractéristique de largage de la matière à épandre,
dans lequel le dispositif d'acquisition (22) est conçu pour
- acquérir les informations concernant ledit au moins un disque répartiteur (18a, 18b),
- calculer un spectre de fréquences (32a à 32c) dudit au moins un signal de capteur qui dépend de la caractéristique de largage de la matière à épandre ;
- acquérir des propriétés du spectre de fréquences (32a à 32c) calculé ;
- déduire les informations concernant ledit au moins un disque répartiteur (18a, 18b) à partir du spectre de fréquences (32a à 32c) calculé et/ou des propriétés acquises du spectre de fréquences (32a à 32c), et
l'appareil d'épandage agricole (10) étant conçu pour un réglage automatique de paramètres de réglage en fonction des informations acquises concernant ledit au moins un disque répartiteur (18a, 18b).

9. Appareil d'épandage agricole (10) selon la revendication 8, **caractérisé en ce que** le dispositif d'acquisition (22) est conçu pour
- acquérir les informations concernant ledit au moins un disque répartiteur (18a, 18b),
- comparer le spectre de fréquences (32a à 32c) calculé avec des spectres de référence, les informations concernant ledit au moins un disque répartiteur (18a, 18b) étant associées respectivement aux spectres de référence ; et/ou
- comparer les propriétés acquises du spectre de fréquences (32a à 32c) calculé avec des valeurs de référence, les informations concernant ledit au moins un disque répartiteur (18a, 18b) étant associées respectivement aux valeurs de référence.

10. Appareil d'épandage agricole (10) selon l'une quelconque des revendications 8 et 9, **caractérisé par** un ou plusieurs capteurs (24a à 24c, 26a à 26c) qui sont conçus pour fournir ledit au moins un signal de capteur qui dépend de la caractéristique de largage de la matière à épandre,
dans lequel les un ou plusieurs capteurs (24a à 24c, 26a à 26c) sont disposés à distance dudit au moins un disque répartiteur (18a, 18b) et en particulier au niveau d'un réservoir (12) pour la matière à épandre de l'appareil d'épandage agricole (10).

11. Appareil d'épandage agricole (10) selon l'une quelconque des revendications 8 à 10, **caractérisé par** un dispositif de stockage (30), des valeurs de référence et/ou des spectres de référence étant stockés sur le dispositif de stockage (30) pour la comparaison avec ledit au moins un signal de capteur qui dépend de la caractéristique de largage de la matière à épandre, les informations dudit au moins un disque répartiteur (18a, 18b) étant associées respectivement aux valeurs de référence et/ou aux spectres de référence.

12. Appareil d'épandage agricole (10) selon l'une quelconque des revendications 8 à 11, **caractérisé en ce que** l'appareil d'épandage agricole (10) présente des moyens qui sont conçus pour fonctionner selon le procédé permettant de faire fonctionner un appareil d'épandage agricole (10) selon l'une quelconque des revendications 1 à 7.
